# EUROPÄISCHE PATENTSCHRIFT

(11) **EP 4 011 787 B1**
(45) Veröffentlichungstag und Bekanntmachung des Hinweises auf die Patenterteilung: **07.02.2024**
(21) Anmeldenummer: 20212645.4
(22) Anmeldetag: 09.12.2020
(51) Int. Cl.: B64G 1/22, B64G 1/44, B64G 1/64

(54) **GELENKEINRICHTUNG UND RAUMFLUGKÖPER MIT EINER GELENKEINRICHTUNG**
ARTICULATION DEVICE AND SPACECRAFT WITH ARTICULATION DEVICE
DISPOSITIF ARTICULÉ ET OBJETS SPATIAUX DOTÉS D'UN DISPOSITIF ARTICULÉ

(43) Veröffentlichungstag der Anmeldung: 15.06.2022
(73) Patentinhaber: Airbus Defence and Space GmbH, 82024 Taufkirchen (DE)
(72) Erfinder: Abdoly, Kiyoumars, 82024 Taufkirchen (DE); Retat, Ingo, 82024 Taufkirchen (DE); Axthelm, Robert, 82024 Taufkirchen (DE); Golbeck, Ortwin, 82024 Taufkirchen (DE); Kiolbassa, Sven, 82024 Taufkirchen (DE); Purnhagen, Ingo, 82024 Taufkirchen (DE)
(74) Vertreter: Marschall, Stefan

(56) Entgegenhaltungen:
- DE-T2- 69 003 357
- US-A- 5 716 030
- US-A1- 2012 167 344
- US-B1- 6 484 608

## Beschreibung

Die vorliegende Erfindung hat eine Gelenkeinrichtung zum Ausfalten einer Struktur an einem Raumflugkörper zum Gegenstand. Darüber hinaus betrifft die vorliegende Erfindung einen Raumflugkörper mit einer solchen Gelenkeinrichtung.

Raumflugkörper umfassen oftmals Subsysteme, die zur Verwendung im Laufe einer Mission erst ausgefaltet werden müssen. Die Faltbarkeit derartiger Subsysteme ermöglicht einen raumsparenden und geschützten Transport. Beispielsweise können Antennen, die ausgefaltet werden müssen, oder sogar große Masten, die ausgefahren werden und an deren Ende sich Magnetometer o.ä. befinden, zum Transport in den Weltraum während des Starts mit einer Rakete möglichst kompakt zusammengelegt sein, damit sie in die Nutzlast-Abdeckung der Rakete passen.

Für den Faltmechanismus sind verschiedene Lösungen bekannt, z.B. zylinderförmige geschlitzte Rohre die - elastisch verformt - flach aufgerollt werden und sich beim Ausfahren wieder zu einem Rohr ausrollen. Solche Masten sind steif genug, um die Kräfte aufzunehmen, die z.B. auf eine kleine Antenne im Weltraum wirken, wo es Schwerelosigkeit gibt und eventuell verbleibende Beschleunigungen nur kleine Massen-Trägheits-Kräfte erzeugen. Auch für Gelenke zum Ausfalten von z.B. größeren Antennen-Masten existierende Lösungen sind oft nur für relativ kleine Kräfte ausgelegt.

Aus der US 6 484 608 B1 ist ein zwei-achsiger Positionierungsmechanismus mit zwei Motoren bekannt US2012167344 A1 offenbart eine Gelenkeinrichtung mit einer Überholkupplung. Der vorliegenden Erfindung liegt die Aufgabe zugrunde, eine verbesserte Technik zum Ausfalten von Strukturen bereitzustellen, die besonders belastbar und zuverlässig ist.

Die Aufgabe wird gelöst durch eine Gelenkeinrichtung gemäß Anspruch 1 und einen Raumflugkörper nach Anspruch 12. Vorteilhafte Ausführungsformen sind in den Unteransprüchen, der Beschreibung und den Figuren offenbart.

Eine erfindungsgemäße Gelenkeinrichtung ermöglicht ein Ausfalten einer Struktur an einem Raumflugkörper. Insbesondere kann sie Teil eines entsprechenden Raumflugkörpers oder dazu eingerichtet sein, direkt oder unter Zwischeneinbau einer weiteren Komponente an einem Raumflugkörper montiert zu werden.

Die Gelenkeinrichtung umfasst einen ersten und einen zweiten Schenkel sowie eine Welle, die am ersten Schenkel gelagert und dabei um ihre zentrale Längsachse - zumindest in einem vorgesehenen Winkelbereich - rotierbar ist (relativ zum ersten Schenkel).

Die Welle ist drehfest mit dem zweiten Schenkel verbunden, der so durch eine Rotation der Welle relativ zum ersten Schenkel verschwenkbar ist (wobei die zugehörige Schwenkachse mit der zentralen Längsachse der Welle übereinstimmt). Im Folgenden wird die Welle daher (zur Unterscheidung zu weiter unten beschriebenen Wellen) als "Schwenkwelle" bezeichnet.

Die Gelenkeinrichtung umfasst weiterhin mindestens zwei Antriebseinrichtungen, die jeweils (allein oder im Zusammenwirken mit einer zusätzlichen Komponente) dem Bewirken einer Rotation der Schwenkwelle in mindestens eine Rotationsrichtung dienen. Die Antriebseinrichtungen umfassen dabei jeweils eine Überholkupplung (also einen Freilauf), der mit der Schwenkwelle verbunden ist.

Die Einbeziehung von mindestens zwei Antriebseinrichtungen ermöglicht damit eine besonders zuverlässige Funktion der Gelenkeinrichtung, weil bei einer Störung oder gar einem Ausfall einer der Antriebseinrichtungen immer noch die jeweils andere die Verschwenkung realisieren kann und die Antriebseinrichtungen somit redundant sind. Die Überholkupplungen ermöglichen dabei eine Entkopplung der jeweils schadhaften Antriebseinrichtung von der Schwenkwelle. Für die Aufrechterhaltung der erfindungsgemäßen Antriebsfunktion reicht es aus, dass mindestens eine der Überholkupplungen im Eingriff steht. Eine Überholkupplung kann beispielsweise reibschlüssig mit der Schwenkwelle verbunden sein.

Insbesondere kann eine erfindungsgemäße Gelenkeinrichtung erheblichen Massen-Trägheitskräften standhalten und ist damit dazu geeignet, besonders schwere Strukturen aufzufalten und auch beim Auftreten von Stoßbelastungen sicher im ausgefalteten Zustand zu halten.

Gemäß vorteilhaften Ausführungsformen ist der zweite Schenkel (wahlweise) auch unabhängig von den Antriebeinrichtungen relativ zum ersten Schenkel verschwenkbar, beispielsweise durch direkte Einwirkung auf den zweiten Schenkel oder auf ein mit diesem verbundenes Element. Eine derartige Einwirkung kann zum Beispiel manuell durch einen Menschen oder durch einen separaten Roboter möglich sein. Damit kann auch bei einer Störung oder einer Blockade aller Antriebseinrichtungen ein Verschwenken des zweiten Schenkels (relativ zum ersten Schenkel) und damit die Funktionsfähigkeit der Gelenkeinrichtung sichergestellt werden. Insbesondere sind vorzugsweise alle Antriebseinrichtungen der Gelenkeinrichtung mittels jeweiliger Überholkupplungen mit der Schwenkwelle verbunden. Für eine Bedienung (Einwirkung) durch einen Roboter kann die Gelenkeinrichtung vorzugsweise ein roboterverträgliches Griffstück (z.B. eine sogenannte "Micro-Conical-Fixture") umfassen, das dazu eingerichtet sein kann, vom Roboter ergriffen und bewegt zu werden. Ein derartiges Griffstück kann insbesondere am zweiten Schenkel angeordnet oder mit diesem verbunden sein.

Ein vorgesehener Winkelbereich, in dem die Schwenkwelle relativ zum ersten Schenkel rotierbar ist, kann durch einen Anschlag begrenzt sein; der zweite Schenkel kann dann eine Anschlagsfläche umfassen, die dazu eingerichtet ist, bei einer entsprechenden Verschwenkung des zweiten Schenkels an dem Anschlag anzustoßen. Ein solcher Anschlag kann am ersten Schenkel oder - wenn die Gelenkeinrichtung an einem Raumflugkörper angeordnet ist (ggf. unter Zwischeneinbau einer weiteren Komponente) - am Raumflugkörper selbst oder (ggf.) an der Komponente befestigt sein. Ein zugehöriger maximaler Rotationswinkel, um den also die Schwenkwelle höchstens um ihre zentrale Längsachse rotierbar ist (der also einen vorgesehenen Winkelbereich nach oben beschränkt), kann vorzugsweise mindestens 90°, mindestens 135°, mindestens 180° oder mindestens 270° betragen.

Vorzugsweise bestimmt ein derartiger maximaler Rotationswinkel eine vorgesehene Schwenkstellung des zweiten Schenkels relativ zum ersten Schenkel, so dass also der zweite Schenkel durch eine derartige maximal mögliche Verschwenkung in die vorgesehene Schwenkstellung überführt wird.

Die Antriebseinrichtungen können jeweils Mittel zur Übertragung einer Rotationsbewegung (speziell beispielsweise ein Getriebe) umfassen. Sie können dazu eingerichtet sein, manuell betrieben zu werden. Gemäß vorteilhafter Ausführungsformen umfassen sie jeweils einen Motor zum Bereitstellen von für die Rotationsbewegung einzusetzender Bewegungsenergie.

Gemäß vorteilhaften Ausführungsformen sind derartige Motoren als Elektromotoren ausgebildet. Vorzugsweise weisen diese jeweils eine eigene Stromversorgung auf, so dass die Elektromotoren unabhängig voneinander zu betreiben sind. Auf diese Weise kann eine erhöhte Zuverlässigkeit in der Funktion der Gelenkeinrichtung gewährleistet werden.

Die Gelenkeinrichtung kann bei derartigen, mindestens einen Motor umfassenden Ausführungsformen wenigstens eine Schaltereinrichtung umfassen, die dazu eingerichtet ist, (in entsprechenden Ausführungsformen in einer (der) vorgesehenen Schwenkstellung des zweiten Schenkels) durch den zweiten Schenkel und/oder ein an diesem angeordnetes Element betätigt zu werden und damit den oder die Motoren auszustellen. Die wenigstens eine Schaltereinrichtung wird dann also automatisch betätigt. Damit kann verhindert werden, dass der oder die Motor/en gegen einen Anstoß arbeitet/arbeiten und dabei unnötig be- oder sogar überlastet wird/ werden.

Vorzugsweise sind die mindestens zwei Antriebseinrichtungen dazu eingerichtet, zueinander gleiche Antriebsbewegungen zum Bewirken der Rotation der Schwenkwelle zu erzeugen. Eine erste der Antriebseinrichtungen kann beispielsweise dazu eingerichtet sein, eine Antriebsrotation zu erzeugen, deren Drehzahl und/oder Drehmoment mit einer Drehzahl bzw. einem Drehmoment einer Antriebsrotation übereinstimmen/übereinstimmt, die zu erzeugen eine zweite der Antriebseinrichtungen eingerichtet ist. In Ausführungsformen, bei denen die Antriebseinrichtungen jeweils einen Motor umfassen, sind entsprechend die Motoren vorzugsweise dazu eingerichtet, zueinander gleiche Bewegungsenergien zu erzeugen.

Gemäß vorteilhaften Ausführungsvarianten einer erfindungsgemäßen Gelenkeinrichtung umfasst mindestens eine der Antriebseinrichtungen wenigstens eine Antriebswelle (also eine Welle, die dazu eingerichtet ist, eine Rotation auf die Schwenkwelle zu übertragen). Eine solche Antriebswelle kann insbesondere ein Schneckenrad umfassen (das beispielsweise mit einem vorzugsweise mit der Schwenkwelle verbundenen Zahnrad in Wirkverbindung stehen und so mit diesem ein Getriebe ausbilden kann).

Vorzugsweise umfasst die Gelenkeinrichtung bei derartigen Ausführungsformen mindestens eine Antriebswellen-Lagerbuchse, in der die wenigstens eine Antriebswelle rotierbar (um eine Rotationsachse der Antriebswelle) gelagert ist und die vorzugsweise ihrerseits (und ebenfalls um die Rotationsachse der Antriebswelle) rotierbar relativ zum ersten Schenkel an diesem gelagert ist. Ist dann eine der möglichen Lagerungen beeinträchtigt, so dass also eine Rotation der Antriebswelle in der Antriebswellen-Lagerbuchse oder eine Rotation der Antriebswellen-Lagerbuchse relativ zum ersten Schenkel gestört ist, so kann die jeweils andere Lagerung die Beeinträchtigung kompensieren. Die Zuverlässigkeit der Gelenkeinrichtung ist auf diese Weise weiter erhöht.

Analog kann die Gelenkeinrichtung gemäß vorteilhaften Ausführungsformen (alternativ oder zusätzlich) mindestens eine Schwenkwellen-Lagerbuchse umfassen, die rotierbar (um die zentrale Längsachse der Schwenkwelle) am ersten Schenkel gelagert ist und in der die Schwenkwelle (um ihre zentrale Längsachse) rotierbar ist. Damit bleibt die Schwenkwelle auch dann relativ zum ersten Schenkel rotierbar, wenn eine der Lagerungen gestört ist.

Gemäß vorteilhaften Ausführungsvarianten der vorliegenden Erfindung umfasst die Gelenkeinrichtung einen Verriegelungsmechanismus, der dazu eingerichtet ist, den zweiten Schenkel nach Erreichen einer/der vorgesehenen Schwenkstellung relativ zum ersten Schenkel zu fixieren. Damit kann ein Zurückschwenken des zweiten Schenkels unterbunden werden. Der Verriegelungsmechanismus kann insbesondere als ein Rastmechanismus ausgebildet sein.

Der Verriegelungsmechanismus kann beispielsweise mindestens ein elastisch nachgiebiges Pufferelement sowie einen Vorsprung umfassen, der dazu eingerichtet ist, beim Verschwenken des zweiten Schenkels (also während eines entsprechenden Verschwenkungsvorgangs) entgegen der Rückstellkraft des elastischen Pufferelements auf dieses einzuwirken (es beispielsweise zu komprimieren) und das Pufferelement danach zumindest teilweise wieder zu entlasten, so dass dann also der zweite Schenkel in seiner vorgesehenen Schwenkstellung (relativ zum ersten Schenkel) verrastet ist. Insbesondere unterbindet das Pufferelement also ein weiteres Verschwenken, und der Vorsprung steht im verrasteten Zustand einem Zurückschwenken des zweiten Schenkels entgegen.

Gemäß vorteilhaften Ausführungsformen ist in einer erfindungsgemäßen Gelenkeinrichtung mindestens eine Vertiefung ausgebildet, in der eine erste Komponente einer Verbindungsvorrichtung zumindest teilweise ausgebildet ist. Eine mit der ersten Komponente zu verbindende zweite Komponente wird dann in der vorgesehenen Schwenkstellung des zweiten Schenkels vorzugsweise (ebenfalls) mindestens teilweise in der Vertiefung aufgenommen. Die Verbindungsvorrichtung ist bei solchen Varianten also in seinem geschlossenen (verbundenen) Zustand mindestens teilweise in der Vertiefung versenkt. Dadurch wird die geschlossene Verbindungsvorrichtung gegen eine Lösung durch unbeabsichtigte Einflüsse geschützt.

In Ausführungsvarianten, bei denen zudem - wie oben beschrieben - mindestens eine der Antriebseinrichtungen einen Motor umfasst und die zudem wenigstens eine Schaltereinrichtung für den Motor aufweist, kann die mindestens eine Schaltereinrichtung vorzugsweise mindestens teilweise in der Vertiefung angeordnet, insbesondere in der Vertiefung zu betätigen sein. Auf diese Weise wird die wenigstens eine Schaltereinrichtung geschützt, zudem kann sie automatisch durch die zweite Komponente der Verbindungseinrichtung bedient werden.

Eine erfindungsgemäße Gelenkeinrichtung kann vorteilhaft dazu eingerichtet sein, eine Rotation der Schwenkwelle in lediglich eine vorgesehene Rotationsrichtung zuzulassen, so dass eine resultierende Verschwenkung des zweiten Schenkels relativ zum ersten Schenkel also irreversibel ist. Insbesondere kann mindestens eine der Antriebseinrichtungen dazu eingerichtet sein, eine Übertragung einer Rotation vom zweiten Schenkel auf die jeweilige Überholkupplung zu blockieren. In Varianten, bei denen mindestens eine der Antriebseinrichtungen wie oben erwähnt ein Getriebe umfasst, kann wenigstens eine zugehörige Komponente eine Selbsthemmung aufweisen, welche die genannte Blockierung realisieren kann. Insbesondere geeignet sind hierfür Getriebe mit mindestens einem Schneckenrad, bei dem das Schneckenrad ein mit ihm verbundenes Zahnrad rotieren kann, wobei aber nicht das Zahnrad rotiert werden kann, um eine Rotation des Schneckenrades zu erreichen.

Die genannten Mechanismen zum Unterbinden eines Zurückschwenkens des zweiten Schenkels aus seiner vorgesehenen Schwenkstellung heraus ermöglichen (jeweils allein oder in Kombination) eine besondere Stabilisierung der Gelenkeinrichtung mit in die vorgesehene Schwenkstellung geschwenktem zweiten Schenkel. Insbesondere kann eine erfindungsgemäße Gelenkeinrichtung damit erheblichen Massen-Trägheitskräften standhalten und ist so dazu geeignet, besonders schwere Strukturen aufzufalten und sie auch beim Auftreten von Stoßbelastungen sicher im ausgefalteten Zustand zu halten.

Ein erfindungsgemäßer Raumflugkörper umfasst eine erfindungsgemäße Gelenkeinrichtung gemäß einer in dieser Schrift offenbarten Ausführungsform. Am ersten oder am zweiten Schenkel der Gelenkeinrichtung kann eine Struktur dauerhaft oder lösbar befestigt sein. Eine solche Struktur kann beispielsweise mindestens einen Teil einer Antenne, eines Masts, eines Solarmoduls oder einer Tragstruktur, beispielsweise für eine Plattform umfassen.

Der Raumflugkörper kann beispielsweise als ein Satellit oder zumindest ein Teil einer Raumstation ausgebildet sein. Gemäß speziellen Ausführungsformen ist er als Rakete oder als zumindest eine Stufe einer Rakete ausgebildet. Eine ggf. an einem der Schenkel befestigte Struktur passt dann vorzugsweise in einem ersten (unausgefalteten) Zustand der Gelenkeinrichtung unter eine Nutzlastverkleidung der Rakete und ist dazu eingerichtet, nach einem Abwurf der Nutzlastverkleidung im Weltraum aufgefaltet zu werden.

Insbesondere vorteilhaft sind Ausführungsformen der vorliegenden Erfindung, bei denen die besagte Struktur eine Tragstruktur für eine Plattform zur Montage an einem weiteren Raumflugköper wie insbesondere einer Raumstation umfasst. Eine derartige Plattform, die ganz oder mindestens teilweise ebenfalls von der Struktur umfasst sein kann, kann eine Masse von mindestens 1000kg, mindestens 1500kg oder sogar mindestens 2000kg haben.

Aufgrund der hohen Stabilität der Gelenkeinrichtung gemäß der vorliegenden Erfindung können in einem solchen Fall trotz der hohen Masse auch Stöße toleriert werden, wie sie beispielsweise durch am weiteren Raumflugkörper (insbesondere an der Raumstation) ankoppelnde Raumfahrzeuge erzeugt werden können.

Im Folgenden wird ein Ausführungsbeispiel der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es versteht sich, dass reale Größenverhältnisse von den dargestellten abweichen können.

Es zeigen schematisch:
- Figur 1:: eine exemplarische Ausführungsform einer erfindungsgemäßen Gelenkeinrichtung in einer Explosionsdarstellung;
- Figur 2:: eine Schnittansicht der Gelenkeinrichtung der Figur 1 in einem ersten Zustand; und
- Figur 3:: eine Schnittansicht eins Details der Gelenkeinrichtung der Figuren 1 und 2 in einem zweiten Zustand.

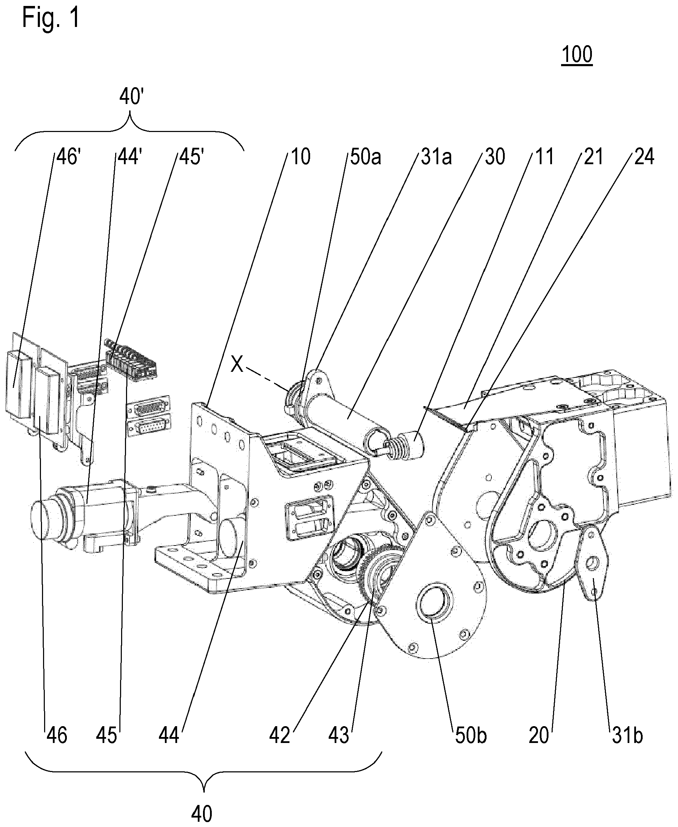

In Figur 1 ist eine Explosionszeichnung eines Ausführungsbeispiels einer erfindungsgemäßen Gelenkeinrichtung 100 mit ihren in perspektivischer Ansicht gezeigten Komponenten zu sehen. Die Gelenkeinrichtung 100 umfasst einen ersten Schenkel 10, einen zweiten Schenkel 20, eine Schwenkwelle 30 und zwei Antriebseinrichtungen 40, 40', von denen in der Figur 1 jeweils nicht alle Teilkomponenten sichtbar sind.

Die Schwenkwelle 30 ist mittels Befestigungselementen 31a, 31b fix (drehfest) mit dem zweiten Schenkel 20 verbunden sowie mittels Schwenkwellen-Lagerbuchsen 50a, 50b am ersten Schenkel 10 um ihre zentrale Längsachse X rotierbar gelagert. Dabei ist die Schwenkwelle 30 relativ zu den Schwenkwellen-Lagerbuchsen 50a, 50b rotierbar und diese sind relativ zum ersten Schenkel 10 (bzw. dessen Gehäuse) rotierbar. Auf diese Weise kann die Schwenkwelle 30 auch im Falle ihres Verklemmens in mindestens einer der Schwenkwellen-Lagerbuchsen 50a, 50b oder im Falle eines Verklemmens mindestens einer der Schwenkwellen-Lagerbuchsen 50a, 50b im ersten Schenkel 10 verschwenkt werden.

Die Antriebseinrichtungen 40, 40` sind jeweils am ersten Schenkel 10 befestigt.

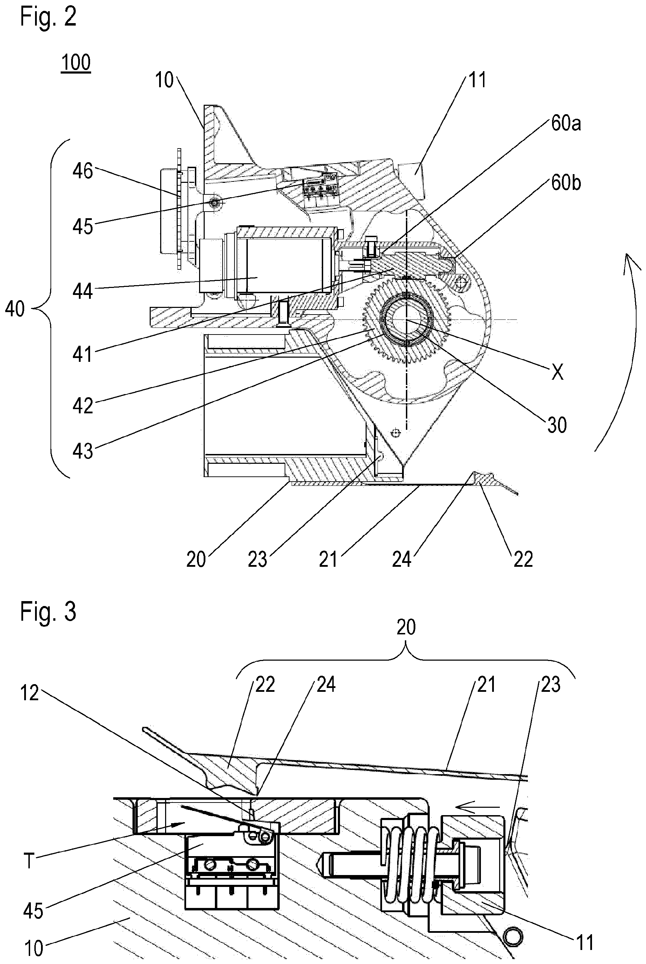

Wie in Schnittdarstellung der Figur 2 erkennbar ist, weist die Antriebseinrichtung 40 im vorliegenden Ausführungsbeispiel ein Getriebe auf, das vorliegend ein drehbar am ersten Schenkel 10 gelagertes Schneckenrad 41 als eine Antriebswelle sowie ein Zahnrad 42 umfasst. Damit kann eine Rotation des Schneckenrades 41 auf eine Rotation des Zahnrades 42 (in einem vorgegebenen Winkelbereich) übertragen und so eine Rotation der Schwenkwelle 30 bewirkt werden. Aufgrund der fixen Verbindung der Schwenkwelle 30 mit dem zweiten Schenkel 20 resultiert aus der Rotation eine Verschwenkung des zweiten Schenkels 20 relativ zum ersten Schenkel 10.

Das Schneckenrad 41 ist dabei in Antriebswellen-Lagerbuchsen 60a, 60b rotierbar, die ihrerseits rotierbar relativ zum ersten Schenkel 10 (bzw. dessen Gehäuse) an diesem gelagert sind. Analog zum Obigen kann auf diese Weise die Rotation der Antriebswelle (des Schneckenrades 41) relativ zum ersten Schenkel auch im Falle eines Verklemmens der Antriebswelle in mindestens einer der Antriebswellen-Lagerbuchsen 60a, 60b oder im Falle eines Verklemmens mindestens einer der Antriebswellen -Lagerbuchsen 60a, 60b im ersten Schenkel 10 (bzw. dessen Gehäuse) sichergestellt werden.

Das Zahnrad 42 der Antriebseinrichtung 40 ist über eine Überholkupplung 43 (einen Freilauf) mit der Schwenkwelle 30 verbunden.

Die in der Figur 2 aufgrund der Schnittebene nicht sichtbare zweite Antriebseinrichtung 40' (von der in der Figur 1 einige andere Komponenten dargestellt sind) ist entsprechend aufgebaut.

Erzeugen nun beide Antriebseinrichtungen 40, 40' dieselbe Drehzahl bei ihrer jeweiligen Zahnräder 42, so wirken beide Antriebseinrichtungen 40, 40' gleichzeitig und verdoppeln das effektive Drehmoment auf die Schwenkwelle.

Stellt hingegen im Betrieb beispielsweise die Antriebseinrichtung 40' durch das zugehörige Zahnrad eine größere Drehzahl für die Schwenkwelle 30 bereit als die Antriebseinrichtung 40, rotiert also das zur Antriebseinrichtung 40' gehörige Zahnrad mit einer Drehzahl, die größer ist als die Drehzahl des Zahnrads 42 der Antriebseinrichtung 40 (oder blockiert diese gar), so bewirkt die Überholkupplung 43, dass die Schwenkwelle 30 vom Zahnrad 42 entkoppelt wird; die Antriebseinrichtung 40' bewirkt damit in einem solchen Fall die Rotation der Schwenkwelle allein. Insbesondere kann die Schwenkwelle 30 auch im Falle eines Blockierens der Antriebseinrichtung 40 rotiert und damit der zweite Schenkel 20 relativ zum ersten Schenkel 10 verschwenkt werden. Entsprechendes gilt anlog, wenn umgekehrt die Antriebseinrichtung 40 eine größere Drehzahl für die Schwenkwelle bereitstellt als die Antriebseinrichtung 40', insbesondere wenn die Antriebseinrichtung 40' blockiert. Die Gelenkeinrichtung 100 weist also redundante Antriebseinrichtungen 40, 40` auf und ist damit besonders zuverlässig.

Schließlich erlaubt die Gelenkeinrichtung 100 eine Verschwenkung des zweiten Schenkels 20 relativ zum ersten Schenkel 10 durch direkte Einwirkung (unabhängig von den Antriebseinrichtungen 40, 40') mit einer Drehzahl, die höher ist als beide von den Antriebseinrichtungen 40, 40' bereitgestellten Drehzahlen (insbesondere wenn beide Antriebseinrichtungen 40, 40' blockieren): Die Überholkupplungen 43 beider Antriebseinrichtungen 40, 40' bewirken in diesem Fall deren Entkopplung von der Schwenkwelle 30. Damit wird die Gefahr eines Ausfalls der Gelenkeinrichtung weiter reduziert. Eine derartige direkte Einwirkung kann damit durch extern wirkende Momente, insbesondere manuell oder mittels eines Roboters erfolgen.

Die Antriebseinrichtungen 40, 40' der in den Figuren 1 und 2 exemplarisch gezeigten Ausführungsform einer erfindungsgemäßen Gelenkeinrichtung 100 umfassen jeweils einen Motor 44, 44', der dazu eingerichtet ist, eine jeweilige Bewegungsenergie bereitzustellen, insbesondere die jeweiligen Schneckenräder 41 um ihre jeweiligen Rotationsachsen zu rotieren. Die Motoren 44, 44' sind dabei vorliegend als Elektromotoren ausgebildet; sie weisen je eine Stromversorgung 46, 46` und eine zugehörige Schaltereinrichtung 45, 45' auf, mittels derer sie abgeschaltet werden können.

Dabei ist die Gelenkeinrichtung 100 so ausgebildet, dass die Schaltereinrichtungen 45, 45' automatisch betätigt werden, wenn der zweite Schenkel 20 in eine vorgesehene Schwenkstellung verschwenkt wurde; dies ist in der Detailansicht der Figur 3 zu erkennen, die einen Teil der Gelenkeinrichtung in einer Situation zeigt, in der der zweite Schenkel im Vergleich zur in der Figur 2 gezeigten Situation relativ zum ersten Schenkel um etwa 175° verschwenkt ist; bei einer weiteren Verschwenkung auf insgesamt 180°, wie sie in der Figur 2 durch einen Pfeil angedeutet ist, würde der zweite Schenkel im dargestellten Ausführungsbeispiel eine vorgesehene Schwenkstellung erreichen.

In der vorgesehenen Schwenkstellung liegt eine Lasche 21 des zweiten Schenkels 20 am ersten Schenkel 10 an; die dem ersten Schenkel zugewandte Fläche der Lasche 21 bildet damit eine Anschlagsfläche, die (ebenso wie das elastische Pufferelement 11 und der daran anstoßende Vorsprung 23) einen Rotationsbereich der Schwenkwelle 30 relativ zum ersten Schenkel 10 beschränkt (also einen maximalen Rotationswinkel definiert).

Ein an der Lasche 21 ausgebildeter Überhang 22 ragt dabei in eine in einer Oberfläche des ersten Schenkels 10 ausgebildete Vertiefung T hinein. Auf diese Weise kann der den Überhang 22 umfassende zweite Schenkel 20 zusammen mit der Vertiefung T Rückstellkräfte aufnehmen. So kann der zweite Schenkel in der vorgesehenen Schwenkposition verriegelt werden.

In der Vertiefung T sind vorliegend die Schaltereinrichtungen 45, 45' angeordnet. Sie werden durch den Überhang 22 betätigt, wenn der zweite Schenkel 20 in der vorgesehenen Schwenkstellung ist. Die zugehörigen Motoren 44, 44' (siehe Figur 1) werden damit nach Erreichen der vorgesehenen Schwenkungsstellung ausgeschaltet. Damit wird verhindert, dass der jeweilige Motor gegen einen Anstoß arbeitet und dabei unnötig be- oder sogar überlastet wird.

Die dargestellte Gelenkeinrichtung 100 weist weiterhin einen ersten Rastmechanismus auf, der dazu eingerichtet ist, den zweiten Schenkel 20 nach Erreichen der vorgesehenen Schwenkstellung relativ zum ersten Schenkel 10 zu fixieren. Der Rastmechanismus umfasst dabei vorliegend eine erste Komponente 11 in Form eines elastischen Pufferelements und eine zweite Komponente in Form eines Vorsprungs 23. Letzterer ist dazu eingerichtet, beim Verschwenken des zweiten Schenkels in die vorgesehene Schwenkstellung zunächst entgegen der Rückstellkraft des elastischen Pufferelements auf dieses einzuwirken, wie es in der Figur 3 durch einen Pfeil angedeutet ist, und es dann zumindest teilweise wieder zu entlasten. Auf diese Weise rastet der Vorsprung vorliegend in eine Aushöhlung im Pufferelement 11 ein, was damit einer weiteren Verschwenkung ebenso wie einem Zurückschwenken des zweiten Schenkels 20 entgegenwirkt. Auch auf diese Weise wird die Gelenkeinrichtung in der vorgesehenen Schwenkposition verriegelt.

Im dargestellten Ausführungsbeispiel ist das elastische Pufferelement 11 am ersten Schenkel 10 angeordnet und der Vorsprung 23 am zweiten Schenkel 20 ausgebildet; es versteht sich, dass umgekehrt das elastische Pufferelement am zweiten und der auf dieses einwirkende Vorsprung am ersten Schenkel ausgebildet sein könnte.

Die dargestellte Gelenkeinrichtung 100 weist weiterhin einen Verbindungsmechanismus auf, der eine in der Vertiefung T am ersten Schenkel 10 ausgebildete erste Komponente 12 in Form mindestens einer Aussparung sowie mindestens eine am Überhang 22 ausgebildete zweite Komponente 24 in Form einer Nase umfasst, die dazu eingerichtet ist, in der vorgesehenen Schwenkstellung des zweiten Schenkels 20 in die Aussparung einzugreifen. Der Verbindungsmechanismus ist damit dazu eingerichtet zu verhindern, dass sich der Überhang 22 bei einem Verschwenken des Schenkels 20 und/oder bei einem Verbiegen der Lasche 21 aus der Vertiefung T löst. Insbesondere verhindert er, dass sich die Lasche 21 bei einer Zugbelastung durch geometrisch bedingte Querkräfte aufbiegen kann.

Insbesondere ist die Aussparung im gezeigten Beispiel als eine Nut ausgebildet, die sich parallel zur zentralen Längsachse der Schwenkwelle 30 erstreckt. Die Nase ist als Stegvorsprung ausgebildet (siehe Figur 1). Der Verbindungsmechanismus stellt somit vorliegend eine Nut-und-Feder-Verbindung dar.

Eine das Eingreifen der mindestens einen Nase 24 in die mindestens eine Aussparung 12 ermöglichende Flexibilität wird dabei durch das elastisch nachgiebige Pufferelement 11 und den Vorsprung 23 erzeugt. Nach dem Eingreifen, wenn also die Verbindung der ersten und zweiten Komponente hergestellt ist, drückt die Rückstellkraft des elastisch nachgiebigen Pufferelements die Nase 24 in die Aussparung 12 und verrastet so die Verbindung. Insbesondere entsteht eine zumindest annähernd steife Verbindung der Lasche 21 mit dem ersten Schenkel 10, die nur wenig Spiel aufweist.

Zusätzlich zur Rastverbindung mit dem elastischen Pufferelement und dem Vorsprung 23 verhindern bei der dargestellten Gelenkeinrichtung 100 auch die Antriebseinrichtungen 40, 40' ein Zurückschwenken des zweiten Schenkels relativ zum ersten Schenkel, weil die Schwenkwelle 30 bei einer entsprechenden Rotation über die Überholkupplungen 43 ein Moment auf die Zahnräder 42 überträgt. Diese können aber die jeweiligen Schneckenräder 41 aufgrund deren Selbsthemmung nicht zurückdrehen. Über die axiale Lagerung der Schneckenräder 41 werden entstehende Längskräfte aufgenommen.

Offenbart ist eine Gelenkeinrichtung 100 zum Ausfalten einer Struktur an einem Raumflugkörper. Die Gelenkeinrichtung umfasst einen ersten Schenkel 10, einen zweiten Schenkel 20, eine Schwenkwelle 30, die um ihre zentrale Längsachse X rotierbar am ersten Schenkel 10 gelagert sowie mit dem zweiten Schenkel 20 verbunden ist, sowie mindestens zwei Antriebseinrichtungen 40, 40' jeweils zum Bewirken einer Rotation der Schwenkwelle 30 in mindestens eine Rotationsrichtung. Die Antriebseinrichtungen 40, 40' weisen jeweils eine Überholkupplung 43 auf, die mit der Schwenkwelle 30 verbunden ist.

Weiterhin offenbart ist ein Raumflugkörper mit einer Gelenkeinrichtung 100.

### Bezugszeichen

- 10: erster Schenkel
- 11: Pufferelement

- 20: zweiter Schenkel
- 21: Lasche
- 22: Überhang
- 23: Vorsprung
- 24: zweite Komponente (eines Verbindungsmechanismus) in Form einer Nase

- 30: Schwenkwelle
- 31a, 31b: Befestigungselement

- 40, 40`: Antriebseinrichtung
- 41: Schneckenrad
- 42: Zahnrad
- 43: Überholkupplung
- 44, 44`: Motor
- 45, 45`: Schaltereinrichtung
- 46, 46`: Stromversorgung

- 50a, 50b: Schwenkwellen-Lagerbuchse

- 60a, 60b: Antriebswellen-Lagerbuchse

- 100: Gelenkeinrichtung

- T: Vertiefung
- X: zentrale Längsachse der Schwenkwelle 30; Schwenkachse

## Patentansprüche

1. Gelenkeinrichtung (100) zum Ausfalten einer Struktur an einem Raumflugkörper, wobei die Gelenkeinrichtung umfasst:
- einen ersten Schenkel (10),
- einen zweiten Schenkel (20),
- eine Schwenkwelle (30), die um ihre zentrale Längsachse (X) rotierbar am ersten Schenkel (10) gelagert sowie drehfest mit dem zweiten Schenkel (20) verbunden ist,
- mindestens zwei Antriebseinrichtungen (40, 40') jeweils zum Bewirken einer Rotation der Schwenkwelle (30) in mindestens eine Rotationsrichtung,
wobei die Antriebseinrichtungen (40, 40') jeweils eine Überholkupplung (43) umfassen, die mit der Schwenkwelle (30) verbunden ist.

2. Gelenkeinrichtung gemäß Anspruch 1, wobei der zweite Schenkel (20) auch unabhängig von den Antriebseinrichtungen (40, 40') durch direkte Einwirkung relativ zum ersten Schenkel (10) verschwenkbar ist.

3. Gelenkeinrichtung gemäß einem der vorhergehenden Ansprüche, wobei mindestens einer der Antriebseinrichtungen (40, 40') einen Motor (44, 44') zum Bereitstellen von Bewegungsenergie umfasst.

4. Gelenkeinrichtung gemäß Anspruch 3, die zudem wenigstens eine Schaltereinrichtung (45, 45') für den mindestens einen Motor (44, 44') umfasst, die dazu eingerichtet ist, in einer vorgesehenen Schwenkstellung des zweiten Schenkels (20) durch diesen und/oder ein daran angeordnetes Element betätigt zu werden und damit den mindestens einen Motor (44, 44') abzustellen.

5. Gelenkeinrichtung gemäß einem der vorhergehenden Ansprüche, wobei mindestens eine der Antriebseinrichtungen (40, 40') wenigstens eine Antriebswelle (41) umfasst, die in wenigstens einer Antriebswellen-Lagerbuchse (60a, 60b) rotierbar ist, wobei die wenigstens eine Antriebswellen-Lagerbuchse (60a, 60b) ihrerseits rotierbar relativ zum ersten Schenkel (10) an diesem gelagert ist.

6. Gelenkeinrichtung gemäß einem der vorhergehenden Ansprüche, die zudem mindestens eine Schwenkwellen-Lagerbuchse (50a, 50b) umfasst, in der die Schwenkwelle (30) rotierbar ist und die rotierbar am ersten Schenkel (10) gelagert ist.

7. Gelenkeinrichtung gemäß einem der vorhergehenden Ansprüche, die einen Verriegelungsmechanismus umfasst, der dazu eingerichtet ist, den zweiten Schenkel (20) nach Erreichen einer vorgesehenen Schwenkstellung relativ zum ersten Schenkel (10) zu fixieren.

8. Gelenkeinrichtung gemäß Anspruch 7, wobei der Verriegelungsmechanismus mindestens ein elastisches Pufferelement (11) sowie einen Vorsprung (23) umfasst, der dazu eingerichtet ist, beim Verschwenken des zweiten Schenkels (20) in die vorgesehene Schwenkstellung einer Rückstellkraft des elastischen Pufferelements (11) entgegen auf dieses einzuwirken und das elastische Pufferelement danach zumindest teilweise wieder zu entlasten.

9. Gelenkeinrichtung gemäß einem der vorhergehenden Ansprüche, in der mindestens eine Vertiefung (T) ausgebildet ist und die einen Verbindungsmechanismus mit einer ersten Komponente (12) und einer mit der ersten Komponente zu verbindenden zweiten Komponente (24) umfasst,
wobei mindestens ein Teil der ersten Komponente (12) des Verbindungsmechanismus in der Vertiefung (T) angeordnet ist und wobei die Vertiefung (T) dazu eingerichtet ist, in der vorgesehenen Schwenkstellung des zweiten Schenkels eine mit der ersten Komponente verbundene zweite Komponente (24) zumindest teilweise aufzunehmen.

10. Gelenkeinrichtung gemäß Anspruch 9 mit den zusätzlichen Merkmalen des Anspruchs 4, wobei die Schaltereinrichtung (45, 45') mindestens teilweise im Inneren der Vertiefung (T) angeordnet ist.

11. Gelenkeinrichtung gemäß einem der vorhergehenden Ansprüche, wobei mindestens eine der Antriebseinrichtungen (40, 40') dazu eingerichtet ist, eine Übertragung einer Rotation vom zweiten Schenkel auf ihre Überholkupplung (43) zu blockieren.

12. Raumflugkörper mit einer Gelenkeinrichtung (100) gemäß einem der vorhergehenden Ansprüche.

13. Raumflugkörper gemäß Anspruch 12, der eine am ersten Schenkel (10) oder am zweiten Schenkel (20) dauerhaft oder lösbar befestigte Struktur umfasst.

14. Raumflugkörper gemäß Anspruch 13, wobei die Struktur mindestens einen Teil einer Antenne, eines Masts, eines Solarmoduls oder einer Tragstruktur für eine Plattform umfasst.

15. Raumflugkörper gemäß einem der Ansprüche 13 oder 14, der als Stufe einer Rakete oder als Rakete ausgebildet ist, wobei die Struktur in einem ersten Zustand der Gelenkeinrichtung unter eine Nutzlastverkleidung der Rakete passt und dazu eingerichtet ist, nach einem Abwurf der Nutzlastverkleidung im Weltraum aufgefaltet zu werden.

## Claims

1. Articulation device (100) for deploying a structure on a spacecraft, wherein the articulation device comprises:
- a first leg (10),
- a second leg (20),
- a pivot shaft (30), which is mounted on the first leg (10) so as to rotate about its central longitudinal axis (X) and is connected in a rotationally fixed manner to the second leg (20),
- at least two drive devices (40, 40') each for causing rotation of the pivot shaft (30) in at least one rotational direction,
wherein the drive devices (40, 40') each comprise an overrunning clutch (43), which is connected to the pivot shaft (30).

2. Articulation device according to Claim 1, wherein the second leg (20) can also be pivoted independently of the drive devices (40, 40') through direct action relative to the first leg (10).

3. Articulation device according to one of the preceding claims, wherein at least one of the drive devices (40, 40') comprises a motor (44, 44') for providing kinetic energy.

4. Articulation device according to Claim 3, which also comprises at least one switch device (45, 45') for the at least one motor (44, 44'), which switch device (45, 45') is designed to be actuated by the second leg (20) and/or an element arranged thereon in an intended pivoted position of the second leg (20) and thus to switch off the at least one motor (44, 44').

5. Articulation device according to one of the preceding claims, wherein at least one of the drive devices (40, 40') comprises at least one drive shaft (41), which can be rotated in at least one drive shaft bearing bushing (60a, 60b), wherein the at least one drive shaft bearing bush (60a, 60b) is in turn mounted on the first leg (10) so as to be rotatable relative thereto.

6. Articulation device according to one of the preceding claims, which also comprises at least one pivot shaft bearing bush (50a, 50b), in which the pivot shaft (30) can be rotated and which is rotatably mounted on the first leg (10).

7. Articulation device according to one of the preceding claims, which comprises a locking mechanism, which is designed to fix the second leg (20) after an intended pivoted position has been reached relative to the first leg (10).

8. Articulation device according to Claim 7, wherein the locking mechanism comprises at least one resilient buffer element (11) and a projection (23), which, when the second leg (20) is pivoted into the intended pivoted position, is designed to act on the resilient buffer element (11) counter to a restoring force thereof and to at least partially relieve the resilient buffer element again thereafter.

9. Articulation device according to one of the preceding claims, in which at least one recess (T) is formed and which comprises a connecting mechanism with a first component (12) and a second component (24) to be connected to the first component, wherein at least part of the first component (12) of the connecting mechanism is arranged in the recess (T) and wherein the recess (T) is designed to at least partly accommodate a second component (24) connected to the first component in the intended pivoted position of the second leg.

10. Articulation device according to Claim 9 having the additional features of Claim 4, wherein the switch device (45, 45') is arranged at least partly inside the recess (T).

11. Articulation device according to one of the preceding claims, wherein at least one of the drive devices (40, 40') is designed to block transmission of rotation from the second leg to its overrunning clutch (43).

12. Spacecraft having an articulation device (100) according to one of the preceding claims.

13. Spacecraft according to Claim 12, which comprises a structure permanently or releasably attached to the first leg (10) or to the second leg (20).

14. Spacecraft according to Claim 13, wherein the structure comprises at least part of an antenna, a mast, a solar module or a support structure for a platform.

15. Spacecraft according to either of Claims 13 or 14, which is designed as a stage of a rocket or as a rocket, wherein, in a first state of the articulation device, the structure fits under a payload fairing of the rocket and is designed to be deployed in space after the payload fairing is jettisoned.

## Revendications

1. Dispositif d'articulation (100), destiné à déployer une structure sur un engin spatial, le dispositif d'articulation comprenant :
- une première branche (10),
- une deuxième branche (20),
- un arbre pivotant (30), qui est logé en étant rotatif autour de son axe longitudinal (X) central sur la première branche (10) et qui est relié de manière solidaire en rotation avec la deuxième branche (20),
- au moins deux dispositifs d'entraînement (40, 40'), destinés chacun à provoquer une rotation de l'arbre pivotant (30) dans au moins un sens de rotation,
les dispositifs d'entraînement (40, 40') comprenant chacun un embrayage à roue libre (43) qui est relié avec l'arbre pivotant (30).

2. Dispositif d'articulation selon la revendication 1, la deuxième branche (20) étant également susceptible de pivoter indépendamment des dispositifs d'entraînement (40, 40') par action directe par rapport à la première branche (10).

3. Dispositif d'articulation selon l'une quelconque des revendications précédentes, au moins l'un des dispositifs d'entraînement (40, 40') comprenant un moteur (44, 44'), destiné à mettre à disposition de l'énergie cinétique.

4. Dispositif d'articulation selon la revendication 3, qui comprend par ailleurs au moins un dispositif de commutation (45, 45') pour l'au moins un moteur (44, 44'), qui est configuré pour, dans une position de pivotement prévue de la deuxième branche (20) être actionné par celle-ci et/ou par un élément placé sur celle-ci et couper de ce fait l'au moins un moteur (44, 44').

5. Dispositif d'articulation selon l'une quelconque des revendications précédentes, au moins l'un des dispositifs d'entraînement (40, 40') comprenant au moins un arbre d'entraînement (41) qui est rotatif dans au moins coussinet (60a, 60b) d'arbre d'entraînement, pour sa part, l'au moins un coussinet (60a, 60b) d'arbre d'entraînement étant logé sur la première branche (10) en étant rotatif par rapport à celle-ci.

6. Dispositif d'articulation selon l'une quelconque des revendications précédentes, qui comprend par ailleurs au moins un coussinet (50a, 50b) d'arbre pivotant, dans lequel l'arbre pivotant (30) est rotatif et qui est logé de manière rotative sur la première branche (10).

7. Dispositif d'articulation selon l'une quelconque des revendications précédentes, qui comprend un mécanisme de verrouillage qui est configuré pour fixer la deuxième branche (20) par rapport à la première branche (10), après l'atteinte d'une position de pivotement prévue.

8. Dispositif d'articulation selon la revendication 7, le mécanisme de verrouillage comprenant au moins un élément amortisseur (11) élastique, ainsi qu'une saillie (23) qui est configurée pour, lors du pivotement de la deuxième branche (20) dans la position de pivotement prévue, agir sur l'élément amortisseur (11) élastique à l'encontre d'une force de rappel de celui-ci et pour redécharger ensuite au moins partiellement l'élément amortisseur élastique.

9. Dispositif d'articulation selon l'une quelconque des revendications précédentes, dans lequel est ménagé au moins un renfoncement (T) et qui comprend un mécanisme de liaison pourvu d'un premier composant (12) et d'un deuxième composant (24) qui doit être relié avec le premier composant, au moins une partie du premier composant (12) du mécanisme de liaison étant placée dans le renfoncement (T) et le renfoncement (T) étant configuré pour, dans la position de pivotement prévue de la deuxième branche, réceptionner au moins partiellement un deuxième composant (24) assemblé avec le premier composant.

10. Dispositif d'articulation selon la revendication 9, présentant les caractéristiques additionnelles de la revendication 4, le dispositif de commutation (45, 45') étant placé au moins partiellement à l'intérieur du renfoncement (T).

11. Dispositif d'articulation selon l'une quelconque des revendications précédentes, au moins l'un des dispositifs d'entraînement (40, 40') étant configuré pour bloquer une transmission d'une rotation de la deuxième branche sur son embrayage à roue libre (43).

12. Engin spatial, pourvu d'un dispositif d'articulation (100) selon l'une quelconque des revendications précédentes.

13. Engin spatial selon la revendication 12, qui comprend une structure fixée durablement ou de manière amovible sur la première branche (10) ou sur la deuxième branche (20) .

14. Engin spatial selon la revendication 13, la structure comprenant au moins une partie d'une antenne, d'un mât, d'un module solaire ou d'une structure porteuse pour une plateforme.

15. Engin spatial selon l'une quelconque des revendications 13 ou 14, qui est conçu sous la forme d'un étage d'une fusée ou d'une fusée, dans un premier état du dispositif d'articulation, la structure passant sous une coiffe de la fusée et étant configurée pour se déployer dans l'espace après un largage de la coiffe.
